# EUROPEAN PATENT APPLICATION

(11) **EP 4 535 307 A1**
(43) Date of publication of application: **09.04.2025**
(21) Application number: 23201942.2
(22) Date of filing: 05.10.2023
(51) Int. Cl.: G06V 20/69

(54) **A SYSTEM AND METHOD FOR ANALYZING BIOLOGICAL SAMPLE IN VIEW OF PARASITE CHARACTERISATION**

(71) Applicant: Ceva Santé Animale, 33500 Libourne (FR)
(72) Inventor: LAIDOUDI, Younes, 33500 LIBOURNE (FR); CAPEDEVIELLE, Marc, 33500 LIBOURNE (FR)
(74) Representative: Plasseraud IP

(57) **Abstract**

It is disclosed a method for analyzing a biological sample comprising parasites, the method comprising:
- Acquiring (100), with a microscope, a set of images of different layers of the biological sample, the images of different layers being acquired at different focal planes of the microscope and for a constant position of the biological sample in a plane orthogonal to the microscope's optical axis,
- Processing (300) the acquired set of images to extract at least a region of an image containing one parasite, and,
- Determining (400) a species of the parasite by application, on at least one extracted region, of a trained classification algorithm.

## Description

### FIELD OF THE INVENTION

The present disclosure is related to a semi-automated method and system for analyzing biological samples in order to detect, identify, classify, and/or count parasites. The disclosure may in particular be applied for the identification of poultry, swine and other animal or human parasites, especially gastrointestinal parasites, such as the agents of swine (i.e., *Eimeria debliecki, Eimeria spinosa, Cystoisospora* (*Isospora*)) and poultry (i.e., *E. acervulina, E. maxima, E. tenella, E. necatrix, E. brunetti, E. mitis, and E. praecox*) coccidiosis. Biological sample means a sample comprising living organisms.

### TECHNICAL FIELD

Flotation method is a classical process in parasitology that selectively separates parasites (i.e., larvae, ova, cysts and oocysts) upon whether they are hydrophilic or hydrophobic. Combined with direct microscopy it represents one of the most applied coprological diagnosis of these pathogens. However, it remains laboring and timeconsuming methods. Thus, the increase of alternative method like serology and molecular biology becomes the easiest solution for rapid and accurate identification and/or quantification of parasitic specimens from biological samples such as feces and droppings. Despite the improvement reached by these alternative methods, they remain expensive and require sophisticated laboratory equipment, which constitutes a limitation of their use as rapid and efficient methods.

To this end, numerous attempts were recently proposed to facilitate the morphological identification of parasites. For example, the introduction of the concept of digital parasitology (based on compact unit of microscope and camera as well as automated slide scanning) has been introduced as alternative low-cost methods in canine and feline parasitology encompassing the diagnosis of parasitic helminths. However, as this field of endeavor is new, the development processes are continuous in order to improve the digital microbiology field. Nowadays, the only available method proposed to facilitate the diagnosis of coccidiosis is restricted to a simple identification of *Eimeria* species of domestic fowl from oocyst micrographs as it was described by César A. B. Castañón et al. "Biological shape characterization for automatic image recognition and diagnosis of protozoan parasites of the genus Eimeria*".* This method is based on the elaboration of a database of single layer photomicrographs of the seven *Eimeria* species of domestic fowl to serve as reference template for the comparative automated identification of parasite images previously captured from biological samples. The approach relies on a Bayesian classifier and image similarity based on morphometric features of the parasites (i.e., curvature, geometry, and texture). The image database as well as the image processing analysis are provided as an open-source server namely COCCIMORPH.

The results disclosed in the above-cited publication mention a percentage of correct species assignment of 85.75%, but the performances of the algorithm vary throughout the species of *Eimeria.* In fact, the algorithm provides performance exceeding 90% of correct recognition for only three species of *Eimeria* (*E. maxima, E. brunetti* and *E*. *mitis*) but the other four species are identified with a success rate comprised between 74.23% and 83.83%.

The present invention is directed to the improvement of the diagnosis of parasites, especially gastrointestinal parasites with a focus on the agent of coccidiosis. In addition, the invention aims at proposing a method for rapid and accurate identification, classification and/or numeration of parasitic specimens in animal populations, and/or in vaccine samples to control oocysts maturity (sporulation) and viability within the production process of vaccines.

### DESCRIPTION OF THE INVENTION

Accordingly, an aim of the present disclosure is to provide a more reliable and faster method of analyzing biological samples for detection, identification, classification and/or counting of parasites.

To this end, a method for analyzing a biological sample comprising parasites, the method comprising:
- Acquiring, with a microscope, a set of images of different layers of the biological sample, the images of different layers being acquired at different focal planes of the microscope and for a constant position of the biological sample in a plane orthogonal to the microscope's optical axis,
- Processing the acquired set of images to extract at least a region of an image containing one parasite, and,
- Determining a species of the parasite by application, on at least one extracted region, of a trained classification algorithm.

In embodiments, the region containing the parasite is extracted from at least one image of the set corresponding to a determined layer of the biological sample.

In embodiments, processing the acquired set of images comprises:
- detecting the position of a parasite, on at least one image of the set corresponding to a determined layer of the biological sample,
- inferring, from said position, coordinates of a two-dimensional region of interest within said image, and
- extracting a three-dimensional volume from the set of images, the three-dimensional volume being formed by a stacking of two-dimensional regions of interest having the same coordinates and extracted from a number of successive images of the set of images.

In embodiments, the number of successive images is predetermined according to the spacing between the different layers of the sample.

In embodiments, the region containing the parasite is extracted from a high-definition image generated from the acquired set of images.

In embodiments, the high-definition image comprises selected image portions from the images of different layers of the biological sample.

In embodiments, the selected image portions have the highest sharpness value of the set of images.

In embodiments, the processing comprises application, on an input image formed of at least one image of the set of images or of a high-definition image generated from the set of images, of a trained segmentation algorithm.

In embodiments, the trained segmentation algorithm is a convolutional neural network configured for performing instance segmentation, for instance a CNN having a U-net architecture.

In embodiments, the trained segmentation algorithm is configured to extract, from the input image, a set of features related to the shape and/or dimensions of the parasite. In embodiments, the different focal planes of acquisition of the images at different layers are spaced from one another by a constant interval.

In embodiments, the biological sample is placed on a microscope slide, and the acquisition comprises scanning, with the microscope, the whole slide at different layers of the biological sample to obtain a set of whole slide images, and dividing each set of whole slide images into a plurality of set of images where each set of images comprises images acquired at different focal planes of the microscope and for a constant position of the biological sample in a plane orthogonal to the microscope's optical axis.

In embodiments, the method further comprises counting the number of parasites contained within the biological sample.

In embodiments, counting the number of parasites comprises counting the number of parasites of each species.

In embodiments, the step of acquiring, with a microscope, a set of images of different layers of the biological sample, is performed at a magnification between x40 and x80, preferably at x80.

In embodiments, the second set of morphologic features represents the microstructure of the parasite, such as the structure of the internal and external walls, micropyle, micropyle cap, oocyst residuum, sporocyst residuum, polar granule, steida body, substeida body, parasteida body, and/or refractile body.

In embodiments, the method further comprises determining a parasite stage, sporulated or non sporulated, of the at least one parasite.

In embodiments, the trained classification algorithm is a deep conventional neural network.

In embodiments, the classification algorithm has been trained by supervised learning on a database comprising, for each of a plurality of parasite species, a plurality of images of parasites of a determined species, where each image has been acquired by a microscope with a magnification of at least x40, an identification of the parasite species.

In embodiments, the method is applied for detection and identification of gastrointestinal parasites selected among the group consisting of:
- The agent of coccidiosis:
   ∘ Eimeria acervulina,
   ∘ Eimeria maxima,
   ∘ Eimeria tenella,
   ∘ Eimeria necatrix,
   ∘ Eimeria brunetti,
   ∘ Eimeria mitis,
   ∘ Eimeria praecox,
   ∘ Cystoisospora suis,
   ∘ Eimeria debliecki, and
   ∘ Eimeria spinosa;
- Helminth eggs;
- Protozoan parasites.

In embodiments, the biological sample is selected from a sample of a vaccine batch, a feces sample, a blood sample or swabs sample.

According to another object, it is disclosed a system for analyzing a biological sample, comprising:
- a microscope, configured for acquiring a set of images of different layers of the biological sample, the images of different layers being acquired at different focal planes of the microscope and for a constant position of the biological sample in a plane orthogonal to the microscope's optical axis, and
- at least one computing device, configured to:
   ∘ process the acquired set of images to extract at least a region of an image containing one parasite, and,
   ∘ determine at least a species of the parasite by application, on at least one extracted region, of a trained classification algorithm.

According to another object, it is disclosed a computer-program product, comprising code instructions for implementing a method comprising the following steps, when it is implemented by a processor:
- from a set of microscope images of different layers of a biological sample acquired at different focal planes, extracting at least a region of an image containing one parasite and,
- determining at least a species of the one parasite by application, on at least one extracted region, of a trained classification algorithm.

The proposed method enables acquiring a set of images of a biological sample comprising parasites at different layers of the sample, and processing the set of acquired images in order to locate, and then determine a species of the parasite. Processing a set of images acquired at different layers of the sample enables obtaining a plurality of views at different layers of the same parasite, on which are visible different morphological features of the parasite. Resultantly, the determination of the species by the trained classification algorithm is more accurate. Also, the set of images acquired at different layers enable detecting and analyzing parasites which may be located at overlapping positions within the sample. Accordingly, it is thus possible to count more reliably a number of parasites contained within the sample. In embodiments, the images are acquired at a magnification of at least x40, and preferably of x80, so that the internal structures of the parasite are sharply represented on the images, and the trained classification algorithm may perform parasite species determination based on these internal structures.

The automated slide scanning can be performed with up to x80 magnification, but for future projects, when needed and suitable, the magnification can be greater than 80x, for example x120.

### DESCRIPTION OF THE DRAWINGS

Other features and advantages of the invention will be apparent from the following detailed description given by way of non-limiting example, with reference to the accompanying drawings, in which:
- Figure 1 and 1b schematically represent two embodiments of a method for analyzing a biological sample according to embodiments.
- Figure 2 schematically represents an example of system for analyzing biological samples according to embodiments.
- Figure 3 schematically represents an embodiment of the training of segmentation and classification algorithm used in the method for analyzing a biological sample.
- Figure 4a is an example of sporulated Eimeria oocyst with identified structures and microstructures, and Figure 4b is an example of the successive images at different layers acquired for a single sporulated Eimeria oocyst.
- Figure 5a represents an example of a segmented region corresponding to a parasite and Figure 5b represents an example of region of interest extracted from an input image, and which is centered on the parasite segmented in figure 5a.

### DETAILED DESCRIPTION OF AT LEAST ONE EMBODIMENT

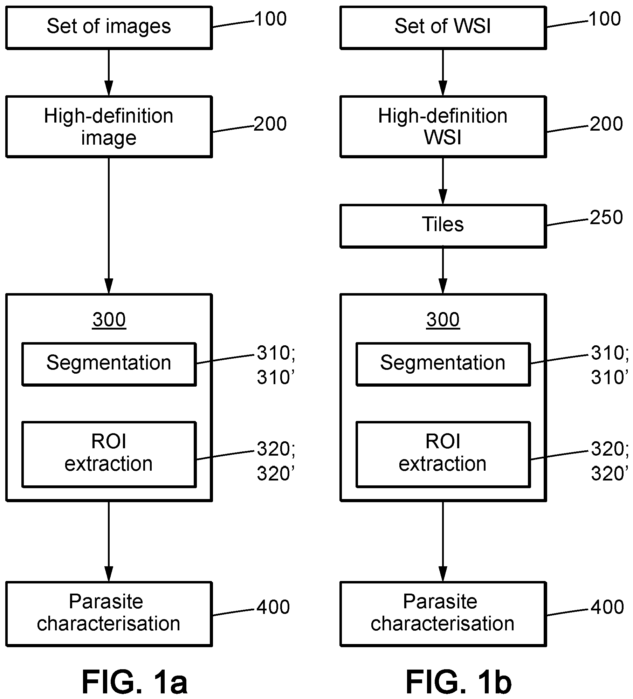

With reference to figures 1a and 1b, embodiments of a method for analyzing a biological sample will now be described. The biological sample may be a sample of a vaccine batch, a feces sample, a blood sample or swabs sample.

The method may be applied in view of detecting and identifying gastrointestinal parasites, blood parasites, or any type of parasites analyzed in histopathology. Identification of a parasite may include determination of the species of the parasite. It may further include stage identification of the parasite, i.e. determining a sporulation stage of the parasite. In embodiments, the method may also be applied to count a number of parasites contained within the sample, where said counting may further include the counting of parasites of each determined species among the sample.

In preferred embodiments, the method is applied to analysis of poultry and swine gastrointestinal parasites, preferably selected among:
- The agents of coccidiosis, namely:
   ∘ Eimeria acervulina,
   ∘ Eimeria maxima,
   ∘ Eimeria tenella,
   ∘ Eimeria necatrix,
   ∘ Eimeria brunetti,
   ∘ Eimeria mitis,
   ∘ Eimeria praecox,
   ∘ Cystoisospora suis,
   ∘ Eimeria debliecki, and
   ∘ Eimeria spinosa;
- Helminth egg,
- Protozoan parasites.

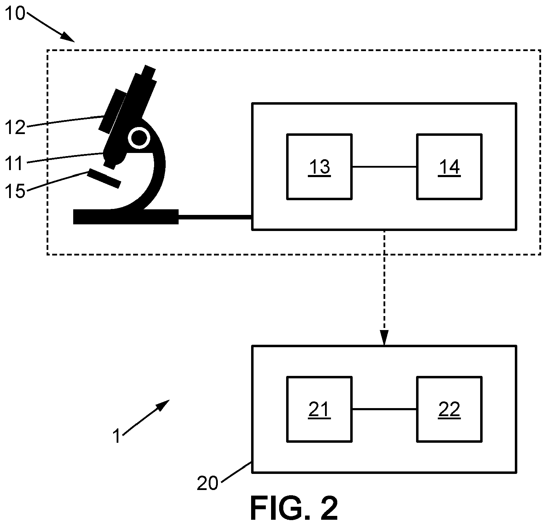

The method may be implemented using an analysis system 1, represented schematically in figure 2, comprising a microscope 10. The microscope 10 is an electronic microscope, including magnifying optics 11 and an optical detector or camera 12, and is coupled to a control unit 13 which is configured for controlling operation of the microscope, and a memory 14 for saving the acquired images.

The microscope may exhibit a variable magnification power of at least x20, and preferably exhibits a variable magnification power over a range covering at least x40 to x80 or x120.

The microscope further comprises a slide support 15, which is configured to receive a slide carrying a biological sample to be analyzed, the slide support 15 being movable relative to the optical axis of the microscope. In embodiments, the slide support 15 is movable in depth with respect to the optical axis in order to enable acquisition of images at different focal planes, and is also movable within a plane orthogonal to the microscope's optical axis, in order to enable acquisition of images of a portion of interest of a slide. The motion of the slide support 15 may be controlled by the control unit 13.

The analysis system 1 further comprises a processing device 20, comprising at least a computer 21 and a memory 22, configured for processing the images acquires by the microscope 10. The memory 22 may in particular store code instructions executed by the computer 21 for performing the image processing steps of the method disclosed below. The memory 22 may also store trained algorithms (i.e. for instance segmentation and classification algorithms) which may be implemented during the image processing. In embodiments, the computer 21 and memory 22 may be formed respectively by the control unit 13 and memory 14 of the microscope. In other words, the microscope may incorporate computational hardware configured for both controlling operation of the microscope for image acquisition and further processing of the acquired images for analysis of the samples. In other embodiments, the processing device 20 may be distinct from the control unit 13 and memory 14 of the microscope. The processing device may be physically collocated with the microscope or may be a remote device that can be accessed by a suitable communication network.

In order to perform analysis, a tissue sample may be positioned on a slide for acquisition of a plurality of images by the microscope. The sample has a thickness which may comprise a plurality of objects of interests, located in different focal planes.

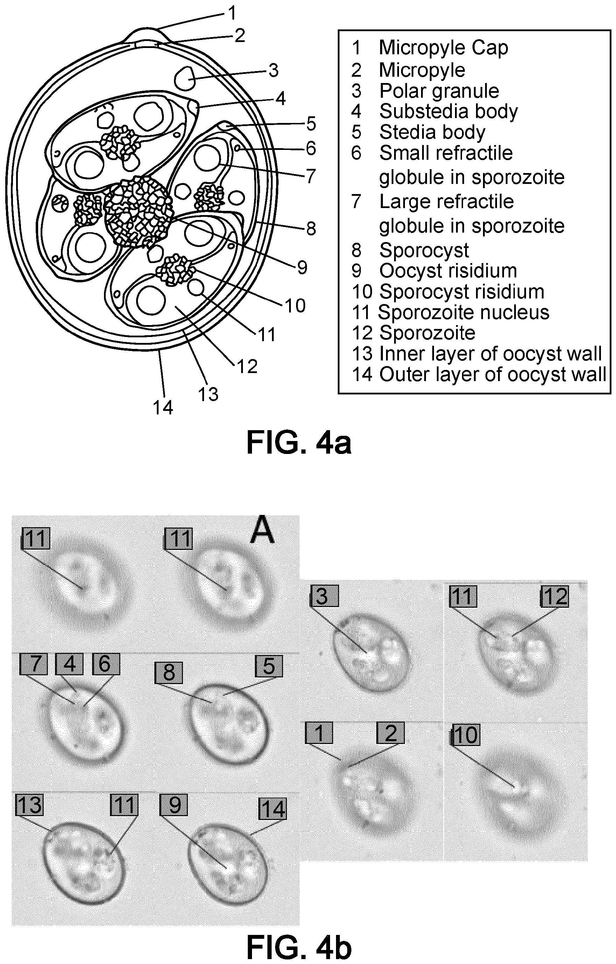

Back to figures 1a and 1b, the method for analyzing the biological sample comprises a first step 100 of acquiring, with the microscope 10, a set of a plurality of images of different layers of the biological sample, where the images of different layers are acquired at different focal planes of the microscope and for a constant position of the biological sample in a plane orthogonal to the microscope's optical axis. As visible in the example shown in figure 4a, which shows a set of images of a sporulated Eimeria sp., the various images of the set represent more or less sharply various internal structures of the parasite. In particular, some structures are visible in only some of all the images of the set. The correspondence of the internal structures is shown in figure 4b which represents the morphological structures of a sporulated Eimeria sp. oocyst. The number of images of the set of acquired images may also be determined according to the type of sample, and in particular to the type of parasite, to be analyzed. In embodiments, the set of acquired images comprises at least 3 images, for instance between 3 and 15 images, preferably between 5 and 10 images.

In embodiments, the different focal planes of acquisition of the images are spaced from one another by a constant interval, which may be determined according to the type of sample, and in particular to the type of parasite, to be analyzed.

In embodiments, in particular for poultry and swine gastrointestinal parasites, this interval may be comprised between 0.05pm and 1µm, preferably between 0.1 µm and 0.5 µm. The interval may be constant and pre-determined, or it may be determined dynamically by the control unit 13, for instance according to a number of sharp pixels or sharp structures that appear at the considered focal plane.

All the images of the set of images are acquired at a constant magnification power, which may be of at least x40, preferably of x80.

In embodiments, step 100 comprises acquisition of a plurality of sets of images for a plurality of different relative positions of the slide (and sample) relative to the microscope, each set of images corresponding to a respective portion of the slide. The different portions of the slide for which sets of images are acquired may cover the whole surface occupied by the sample. This may be in particular interest for counting parasites contained in the sample, or for identifying all parasites species present within the sample.

Alternatively, in a particular embodiment, which is represented in figure 1b, the step of acquiring a set of images at different layers of the biological sample may comprise whole slide scanning of the sample at each of the plurality of different layers, resulting in a set of whole slide images (WSI) acquired at the respective layers of the sample. The images may be acquired or converted into grayscale, and step 100 may also comprise a step of contrast enhancement.

In embodiments, the method may then comprise a step 200 of generating, from the acquired set or sets of images; a single, high-definition image. By "high-definition" image is meant an image having an average resolution that is at least as good as the image having the best average resolution from the set of images. In other words, considering a parasite, the morphological features of the parasite are, in the high-definition image, at least as sharp as the sharpest image from the set. This step may also apply to whole scan images, as shown in figure 1b.

According to a first example, the high-definition image may be an image selected among the set of acquired images according to a determined criterion. The criterion may be of selecting the image layer having highest resolution among all layers of the set, where resolution is defined as the minimal distance between two objects for which the two objects still appear to be distinct. Alternatively, the criterion may be of selecting the image having highest average sharpness value among the images of the set. The sharpness value may be computed, for an edge of the image, as the distance between two pixels belonging to a line crossing the edge, the two pixels exhibiting an intensity value of respectively 10 and 90% of the maximum intensity of the edge. In this case, the high-definition image is thus an image selected among the set of images acquired directly from the microscope.

In other embodiments, the high-definition image may be generated from the set of images.

According to an example, the high-definition image may be a so-called Enhanced Depth of Focus image, hereinafter denoted EDF, which is a single, composite image, comprising selected image portions from a plurality of images of the set. The image portions may be selected as exhibiting highest sharpness value among the images of the set. More specifically, the high-definition image may be a composite image having the same dimensions as each of the acquired images, where the composite image is formed of a plurality of juxtaposed portions, the juxtaposed portions preferably having no superposed areas, where each portion is taken from one among the set of acquired images, as having the highest sharpness value. For instance, for each image of the set, each pixel of the image may be assigned a sharpness value, and the composite image is formed by selecting, for each position within the image, the pixel corresponding to this position having the highest sharpness value among all the images of the set.

One may refer for instance to the US 8,199,997 for a method of generating an EDF image from a stack of images acquired at different layers of the sample.

According to still another example, the high-definition image may be an image formed out of the set of images and in which the 3D information is preserved. For instance, the high-definition image may be a so-called Z-stack image, which may be obtained from the acquired set of images by application of the method disclosed in US 11,263,735. A Z-stack image is an specific type of EdF image in which the spatial arrangement of the objects visible in the images is preserved, in particular along the depth axis. According to another example, the high-definition image may be a three-dimensional image formed by the stack of two-dimensional images at different Z-positions. The three-dimensional representation provides a more comprehensive view of the sample's structure, enabling to analyze its features in three dimensions. Furthermore, when the method comprises acquiring a set or stack of whole slide images at different layers of the sample, each whole slide image may be divided into a plurality of tiles where the tiles form a partition of a whole slide image, and the selection or generation of a high-definition image may be performed on a tile-by-tile basis, i.e. by selecting or generating a high-definition image for each set of tiles obtained by the division of the whole-slide image. In this perspective, even though figure 1b shows a step 250 of dividing a whole slide image into tiles performed after a possible step 200 of generating a HD whole slide image, it is understood that the order of the steps may be the other way around and thus the whole slide images of the set may be divided into tiles and HD images may be generated from the obtained sets of tiles.

The step of generating a single high-definition image is nevertheless optional and the further steps of the method may also apply using as input the acquired set of images corresponding to different focal planes of the microscope.

The method then comprises a step 300 of extracting, from a plurality of images of the set of acquired images, or, on the image generated from the set of acquired images, at least a region of an image containing one parasite, and preferably a plurality of regions where each region contains a single parasite.

When step 300 is implemented on a single high-definition image generated from a set of acquired images, each extracted region is a two-dimensional region of the high-definition image. Step 300 may include a substep 310 of segmenting the high-definition image to generate a segmentation mask in which each parasite is segmented, and a substep 320 of extracting, from the high-definition image, a region of interest for each parasite that is centered on the parasite.

The region may in particular be a bounding box of fixed dimensions. In embodiments, the region of interest may further be annotated with the contour of the parasite. Alternatively, when step 300 is implemented on a set of images acquired at different layers of the sample, step 300 may comprise:
- detecting 310' the position of a parasite in at least one image of the set of images, corresponding to a determined layer of the biological sample, where said detecting may be performed by segmentation of said image of the set,
- inferring, from said position, coordinates of a two-dimensional region of interest within said image, where this two-dimensional region of interest may be a bounding box of determined dimensions that is centered on the parasite, and
- extracting 320' a three-dimensional volume from the set of images, which is formed by a stacking of two-dimensional regions of interest centered on the same coordinates, in the plane of each image, where the regions of interest are extracted from a number of successive images of the set.

Thus, the three-dimensional volume corresponds to a bounding box containing the parasite considered in volume. The number of successive two-dimensional regions of interest that may be selected to form said three-dimensional volume may be determined according to the spacing between the different layers of the sample, so that the total thickness of the volume corresponds to the typical thickness of the type of parasite that is looked for.

Furthermore, at the same coordinates, another parasite may be detected in an image of the set that is at a different layer of the sample than the images from which the three-dimensional volume has been extracted, when two or more parasites are overlapping at the same location within the sample. Step 300 may thus be implemented a plurality of times, and comprising a step of detecting the position of a parasite in a plurality of images of the set that correspond to layers of the parasite that are sufficiently distant from one another to relate to two different parasites.

With reference to figure 1b, when the method comprises acquiring whole slide images at different layers of the biological sample, the method may also comprise a preliminary step 250 of cutting the whole slide images (of the single, high-definition whole slide image, as the case may be) into a plurality of tiles of equal dimensions, where the plurality of tiles forms a partition of the whole slide image, and the step 300 may then be performed on the obtained tiles. As expressed above, when the method comprises generating a single whole-slide image, and the step 250 results in a plurality of tiles where each tile corresponds to part of the whole-slide image. When the method does not comprise generating a single HD whole-slide image from the plurality of whole slide images acquired at different layers of the sample, 250 results in a plurality of stacks of images acquired at different layers of the sample, where each stack correspond to a tile.

In embodiments, step 310 may be performed by implementing, on the high-definition image, on the tile extracted thereof, or on a set of images, a trained segmentation algorithm, configured to locate the parasites on the image or images, i.e. to extract a segmentation mask corresponding to the contour of each parasite. Said segmentation algorithm may be for instance a convolutional neural network configured for performing instance segmentation. Instance segmentation, as known to the skilled person, is a type of segmentation that not only distinguishes between different classes of object, but is also able to distinguish between a plurality of objects belonging to the same category. Thus, an instance segmentation algorithm is configured not only to detect all the parasites in the input image or images, but also to differentiate from one parasite to another, which then enables counting the parasites without considering twice the same parasite.

The trained segmentation algorithm may for instance be a convolutional Neural Network having a U-net architecture.

Such algorithm performs a processing of the image(s) to extract therefrom a set of morphological features related to the shape and/or dimensions of the parasite, and determine from said set of features, whether the input image(s) contain a parasite or not and the contour of the parasite. The morphological features which are extracted may for instance relate to one, or more, or any combination of the following features:
- Curvature of the parasite,
- Length of the parasite,
- Width of the parasite,
- Area of the parasites (number of pixels within the region covered by the parasite),
- Circularity (perimeter²/area)
- Bending energy (one may refer to I. Young, J. Walker, J. Bowie, An Analysis Technique for biological shape I, Inform. Control 25 (4) (1974 357-370)
- Degree of symmetry of the parasite (one may refer to L. Costa, R. Cesar Jr, Shape Analysis and Classification: Theory and Practice, in Pattern Recognition 37(1) (2004) 1-19).

In embodiments, and as explained in more details below, the segmentation algorithm may be trained to locate different types of parasites, which increases its overall ability to detect any of the different types of parasites for which it has been trained.

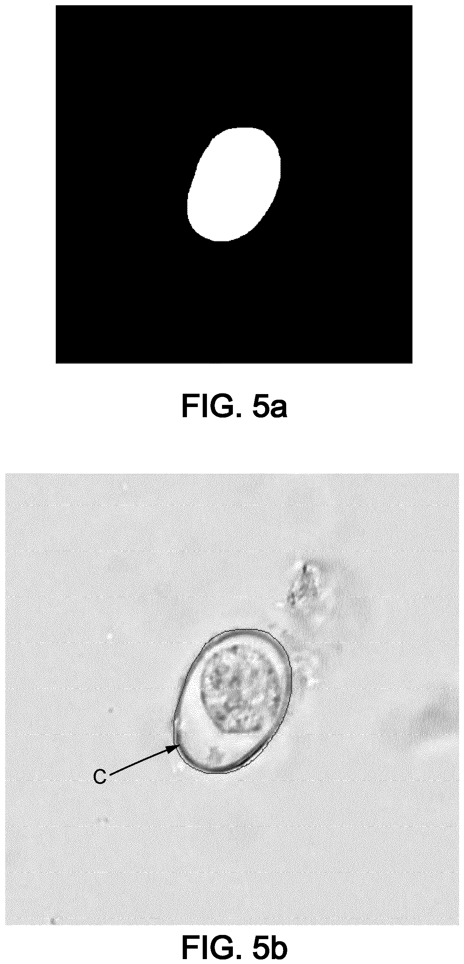

Once the contours of the parasite are determined, step 320 may comprise implementing a script for extracting the region of interest and, as the case may be, the 3D volume of interest from the image(s). Alternatively, the trained segmentation algorithm may be configured to also perform substep 320 and extract the region of interest from the image(s) after having located the parasite. With reference to figure 5a is shown an example of a segmentation mask representing the contour of a parasite present within an input image, and on figure 5b is shown a region of interest extracted from the image and the segmentation mask. The extracted region of interest is centered on the parasite and is further annotated with the contour of the parasite, represented by a line C.

The output of step 300 is thus a two-dimensional or three-dimensional region of interest extracted from respectively an image or a set of images, in which the parasite is centered. The 2D or 3D region may be associated with metadata comprising the coordinates, within the initial whole slide image(s) of the region, or within a tile obtained from the initial whole slide image as well as the identification of the tile. The method then comprises a step 400 of determining at least a species of the parasite by application, on the extracted region of interest, of a trained classification algorithm.

In embodiments, step 400 may also comprise characterizing other features of the parasite, for instance:
- Sporulation stage of the parasite, for instance "sporulated" or "not sporulated",
- Whether the parasite is living or dead,
- Parasite species numeration: i.e. number of parasites of a given species contained in the sample,
- Parasite numeration: i.e. total number of parasites contained in the sample.

The trained classification algorithm may for instance be a convolutional neural network, for instance having a VGG16 or YOLO architecture. In embodiments, the step 400 may comprise running in parallel a plurality of trained classification algorithms having different structures - the computer 21 in that case may have a multicore processor where each core runs a respective algorithm - and determining the parasite species by a majority vote among all the algorithms that are run.

The trained classification algorithm may be configured to determine the parasite species by extracting a set of morphologic features representing the microstructures of the parasite.

This extraction may in particular comprise determining whether or not the outer wall of the parasite is formed by a double wall. Moreover, this extraction may comprise determining presence or not, or any of the following organelles (internal structures) of the parasite:
- Micropyle,
- Micropyle cap,
- Oocyst residuum,
- Sporocyst residuum,
- Polar granule,
- Steida body,
- Substeida body,
- Parasteida body,
- Glucose bag,
- Refractile body, which enable mechanical separation of the oocysts during sporulation.

When one of the above organelle is detected, the extraction of the set of morphologic features relative to the microstructures of the parasite may further comprise determining features relative to the organelle, such as localization, dimensions, shape, a descriptor of a wall of the organelle, etc.

In particular, for micropyle and micropyle cap, extracted features may include dimension, shape, localization within the parasite.

For oocyst residuum and sporocyst residuum, polar granules, steida body, substeida body, parasteida body and refractile body, all these structures can be observed only on sporulated oocysts, and enable to distinguish among various species. Their presence can thus be used as a criterion for determining a sporulated state of an oocyst, and then features extracted from these internal structures may enable differentiate between parasite species. The extracted features may comprise the size, geometric position within the parasite, dimensions, density.

In embodiments, the classification algorithm may further be configured to differentiate whether the sample belongs to a vaccine strain or a field strain according to the amount of glucose present in the parasites, which itself derives from the size of glucose bags present in the parasite.

When the parasite wall is determined as a double wall, further features may be extracted such as: thickness of the internal and external membranes forming the double wall, shape and area covered by each of the internal and external membranes.

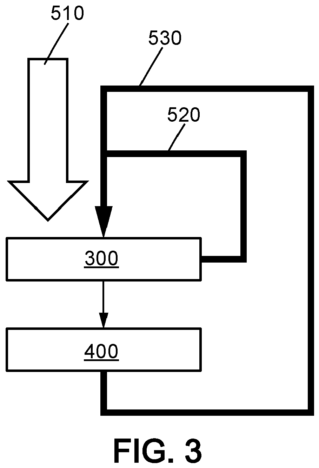

With reference to figure 3 are shown steps of a method for training the segmentation and classification algorithms.

The training may be performed by feeding, during a first training phase 510, the segmentation algorithm with a bunch of images that have been manually processed and annotated. During the first training phase, the images are all issued from a mono-infested sample, i.e. a sample containing a single species of parasite. Said sample may in particular be a vaccine batch.

From said sample, images are acquired in accordance with steps 100 and optionally 200 disclosed above, where the magnification of the microscope is at least x40 and preferably x80, in order to have the internal microstructures of the parasite visible on the images.

In particular, the same type of image (i.e. EDF or Z-stack image for instance) may be used for training and inference. From the image output by step 100 or 200, an operator may manually extract regions of interest where each region is centered on a single parasite, and may annotate the region of interest with at least one of:
- The species of the parasite,
- The sporulation stage of the parasite,
- An indication whether the parasite is live or dead.

The training of the segmentation algorithm may be performed by providing the algorithm with the input image (as input) and the region of interest, or coordinates of the parasite (depending on the type of output that may provide the algorithm) as output.

The training of the classification algorithm may then be performed by providing the region of interest and the annotations. Alternatively, when the input image is a high-definition whole slide image, the classification algorithm may be trained using as input the whole slide image, the same image on which the regions of interest are represented as respective bounding boxes, as well as annotations associated to each bounding box, so that the classification algorithm is trained to annotate a whole slide image with the regions of interest extracted at step 300 and the annotations relative to the parasite.

During a second training phase 520, the same training may be continued with additional images of the same species of parasite, where the additional images are regions of interest extracted by the segmentation algorithm.

The first and second training phases 510, 520, with respectively manually and automatically segmented images, may then be repeated for a plurality of additional species that the classification algorithm may be configured to identify. In addition to enabling the classification algorithm to recognize a new species, this also enables increasing the capacity of the algorithm to differentiate between two species.

During a third training phase 530, the training may be reinforced with the output of the classification algorithm run on either mono-infested or multi-infested sample.

## Claims

1. A method for analyzing a biological sample comprising parasites, the method comprising:
- Acquiring (100), with a microscope, a set of images of different layers of the biological sample, the images of different layers being acquired at different focal planes of the microscope and for a constant position of the biological sample in a plane orthogonal to the microscope's optical axis,
- Processing (300) the acquired set of images to extract at least a region of an image containing one parasite, and,
- Determining (400) a species of the parasite by application, on at least one extracted region, of a trained classification algorithm.

2. The method according to claim 1, wherein the region containing the parasite is extracted from at least one image of the set corresponding to a determined layer of the biological sample.

3. The method according to claim 1 or 2, wherein processing (300) the acquired set of images comprises:
- detecting (310') the position of a parasite, on at least one image of the set corresponding to a determined layer of the biological sample,
- inferring, from said position, coordinates of a two-dimensional region of interest within said image, and
- extracting (320') a three-dimensional volume from the set of images, the three-dimensional volume being formed by a stacking of two-dimensional regions of interest having the same coordinates and extracted from a number of successive images of the set of images.

4. The method according to claim 3, wherein the number of successive images is predetermined according to the spacing between the different layers of the sample.

5. The method according to any of the preceding claims, wherein the processing (300) comprises application (310, 310'), on an input image formed of at least one image of the set of images or of a high-definition image generated from the set of images, of a trained segmentation algorithm.

6. The method according to claim 5, wherein the trained segmentation algorithm is a convolutional neural network configured for performing instance segmentation, for instance a CNN having a U-net architecture.

7. The method according to any of the preceding claims, wherein the biological sample is placed on a microscope slide, and the acquisition (100) comprises scanning, with the microscope, the whole slide at different layers of the biological sample to obtain a set of whole slide images, and dividing each set of whole slide images into a plurality of set of images (250) where each set of images comprises images acquired at different focal planes of the microscope and for a constant position of the biological sample in a plane orthogonal to the microscope's optical axis.

8. The method according to claim 7, further comprising counting the number of parasites contained within the biological sample.

9. The method according to claim 8, wherein counting the number of parasites comprises counting the number of parasites of each species.

10. The method according to any of the preceding claims, wherein the step of acquiring (100), with a microscope, a set of images of different layers of the biological sample, is performed at a magnification between x40 and x80, preferably at x80.

11. The method according to any of the preceding claims, further comprising determining a parasite stage, sporulated or non sporulated, of the at least one parasite.

12. The method according to any of the preceding claims, wherein the classification algorithm has been trained by supervised learning on a database comprising, for each of a plurality of parasite species, a plurality of images of parasites of a determined species, where each image has been acquired by a microscope with a magnification of at least x40, an identification of the parasite species.

13. The method according to any of the preceding claims, the method being applied for detection and identification of gastrointestinal parasites selected among the group consisting of:
- The agent of coccidiosis:
∘ Eimeria acervulina,
∘ Eimeria maxima,
∘ Eimeria tenella,
∘ Eimeria necatrix,
∘ Eimeria brunetti,
∘ Eimeria mitis,
∘ Eimeria praecox,
∘ Cystoisospora suis,
∘ Eimeria debliecki, and
∘ Eimeria spinosa;
- Helminth eggs;
- Protozoan parasites.

14. The method according to any of the preceding claims, wherein the biological sample is selected from a sample of a vaccine batch, a feces sample, a blood sample or swabs sample.

15. A system (1) for analyzing a biological sample for detection, identification and/or counting parasites, comprising:
- a microscope (10), configured for acquiring a set of images of different layers of the biological sample, the images of different layers being acquired at different focal planes of the microscope and for a constant position of the biological sample in a plane orthogonal to the microscope's optical axis, and
- at least one computing device (20), configured to:
∘ process (300) the acquired set of images to extract at least a region of an image containing one parasite, and,
∘ determine (400) at least a species of the parasite by application, on at least one extracted region, of a trained classification algorithm.

16. A computer-program product, comprising code instructions for implementing a method comprising the following steps, when it is implemented by a processor (21):
- from a set of microscope images of different layers of a biological sample acquired at different focal planes, extracting (300) at least a region of an image containing one parasite and,
- determining (400) at least a species of the one parasite by application, on at least one extracted region, of a trained classification algorithm.
